# EUROPÄISCHE PATENTANMELDUNG

(11) **EP 2 555 380 A2**
(43) Veröffentlichungstag der Anmeldung: **06.02.2013**
(21) Anmeldenummer: 12178504.2
(22) Anmeldetag: 30.07.2012
(51) Int. Cl.: H02K 1/18

(54) **Elektrische Maschine sowie Verfahren zur Montage einer elektrischen Maschine**

(30) Priorität: 01.08.2011 DE 102011109228
(71) Anmelder: ROBERT BOSCH GMBH, 70442 Stuttgart (DE)
(72) Erfinder: Corvini, Andre, 13.275.353 Valinhos / Sao Paulo (BR); Helmke, Hauke, 50070 Toluca (MX); Erhard, Tanja, 31157 Sarstedt (DE); Bader, Mathias, 86929 Untermühlhausen (DE); Kugler, Juergen, 74369 Loechgau (DE)

(57) **Zusammenfassung**

Die Erfindung betrifft eine elektrische Maschine (1), insbesondere einer Startereinrichtung für eine Brennkraftmaschine, mit einem Rotor und einem Stator (3), der wenigstens ein Magnetelement (4) aufweist, das mittels zumindest zweier in axialer Richtung zueinander beabstandeter Halteelemente (5,6) ortsfest in einem Gehäuse (2) der elektrischen Maschine (1) angeordnet ist. Dabei ist vorgesehen, dass zumindest eines der Halteelemente (5,6) wenigstens eine in einem Vormontagezustand in radialer Richtung nach außen weisende Haltezunge (11,12) aufweist, die in einem Montagezustand bezüglich einer Längsachse (13) der elektrischen Maschine (1) angewinkelt ist und mit einem Gegenelement (14,15) des Gehäuses (2) zum Halten des Magnetelements (4) bezüglich des Gehäuses (2) zusammenwirkt. Die Erfindung betrifft weiterhin ein Verfahren zur Montage einer elektrischen Maschine (1).

## Beschreibung

Die Erfindung betrifft eine elektrische Maschine, insbesondere einer Startereinrichtung für eine Brennkraftmaschine, mit einem Rotor und einem Stator, der wenigstens ein Magnetelement aufweist, das mittels zumindest zweier in axialer Richtung zueinander beabstandeter Halteelemente ortsfest in einem Gehäuse der elektrischen Maschine angeordnet ist. Die Erfindung betrifft weiterhin ein Verfahren zur Montage einer elektrischen Maschine.

### Stand der Technik

Elektrische Maschinen der eingangs genannten Art sind aus dem Stand der Technik bekannt. Sie finden häufig im Zusammenhang mit Startereinrichtungen für Brennkraftmaschinen Einsatz. Die elektrische Maschine verfügt dabei über einen Rotor und einen ortsfesten Stator. Der Stator verfügt über wenigstens ein Magnetelement, insbesondere ein Permanentmagnetelement. Neben dem Permanentmagnetelement kann zudem ein Flussleitstück als Magnetelement vorgesehen sein. Üblicherweise sind mehrere Permanentmagnetelemente und mehrere Flussleitstücke vorhanden, wobei diese in Umfangsrichtung alternierend angeordnet sind, sodass auf jedes Permanentmagnetelement ein Flussleitstück und umgekehrt folgt. Das Magnetelement ist ortsfest in dem Gehäuse der elektrischen Maschine angeordnet, während der Rotor drehbar an dem Gehäuse gelagert ist. Die Befestigung des Stators beziehungsweise des Magnetelements erfolgt mittels wenigstens zweier Halteelemente, die in axialer Richtung zueinander beabstandet wenigstens bereichsweise in dem Gehäuse der elektrischen Maschine vorliegen. Üblicherweise sind dabei eines der Halteelemente an einer ersten Axialstirnseite des Magnetelements und ein weiteres der Halteelemente an der der ersten Axialstirnseite gegenüberliegenden zweiten Axialstirnseite vorgesehen, insbesondere an dem Magnetelement befestigt. Bei einer Montage der elektrischen Maschine wird nunmehr das Gehäuse bereitgestellt und das wenigstens eine Magnetelement vorzugsweise gemeinsam mit den Halteelementen eingebracht, beispielsweise in dieses eingeschoben. Nach Erreichen eines Montagezustands beziehungsweise einer Montageposition soll das Magnetelement ortsfest in dem Gehäuse befestigt sein.

Aus dem Stand der Technik ist beispielsweise die DE 35 39 851 A1 bekannt. Diese zeigt eine elektrische Maschine, in deren Gehäuse gewölbte Permanentmagnete an der Innenwand anliegen und jedem Permanentmagneten ein an einer seiner Längsseiten anliegendes Flussleitstück zugeordnet ist, welche Permanentmagnete und Flussleitstücke mittels federnder Halteteile in ihrer in Umfangs- und Längsrichtung fixierten Lage im Gehäuse befestigt sind. Dabei sollen die Halteteile aus zwei Ringen bestehen, die mit ihrem zylindrischen Abschnitt jeweils an die Stirnseiten grenzenden Endabschnitte der Innenseite und mit ihrem flanschartigen Rand an den Stirnseiten jeweils der Permanentmagnete und Flussleitstücke anliegen.

Die verwendeten Halteteile haben jedoch den Nachteil, dass sie zueinander unterschiedlich ausgebildet sind, dass also zwei unterschiedliche Halteteile bereitgestellt werden müssen, um die Permanentmagnete in dem Gehäuse zu befestigen.

### Offenbarung der Erfindung

Demgegenüber weist die elektrische Maschine mit den in Anspruch 1 genannten Merkmalen den Vorteil auf, dass die aus dem Stand der Technik bekannten Nachteile beseitigt werden und insbesondere eine gleichartige Ausbildung der Halteelemente und somit eine kostengünstige Herstellung möglich ist. Dies wird erfindungsgemäß erreicht, indem zumindest eines der Halteelemente wenigstens eine in einem Vormontagezustand in radialer Richtung nach außen weisende Haltezunge aufweist, die in einem Montagezustand bezüglich einer Längsachse der elektrischen Maschine angewinkelt ist und mit einem Gegenelement des Gehäuses zum Halten des Magnetelements bezüglich des Gehäuses zusammenwirkt. Die Haltezunge dient demnach dem Festsetzen des Halteelements bezüglich des Gehäuses. Weil das Magnetelement an dem Halteelement beziehungsweise zwischen den Halteelementen angeordnet ist, ist es demnach ebenfalls in dem Gehäuse gehalten, insbesondere sowohl in axialer, radialer als auch in Umfangsrichtung ortsfest gehalten. Die Haltezunge weist in dem Vormontagezustand in radialer Richtung nach außen. Insbesondere ist darunter zu verstehen, dass die Haltezunge ein freies Ende aufweist, welches ausschließlich in radialer Richtung nach außen ragt, ihre größte Erstreckung also in radialer Richtung vorliegt. Das freie Ende beziehungsweise die gesamte Haltezunge verläuft dabei vorzugsweise an keiner Stelle in axialer Richtung. Der Vormontagezustand liegt insbesondere vor, unmittelbar bevor das jeweilige Halteelement in das Gehäuse eingebracht wird.

Nach dem Einbringen des Halteelements in das Gehäuse und insbesondere bei Erreichen des Montagezustands, ist es vorgesehen, dass sich die Haltezunge wenigstens eines der Halteelemente verformt, sodass sie sich nicht ausschließlich in radialer Richtung nach außen erstreckt, sondern zusätzlich eine axiale Erstreckungskomponente aufweist. Insoweit ist die Haltezunge nach Erreichen des Montagezustands üblicherweise schräg angeordnet, sodass sie nicht mehr - wie in dem Vormontagezustand - senkrecht auf einer Längsachse der elektrischen Maschine beziehungsweise des Halteelements steht, sondern vielmehr einen Winkel von kleiner als 90° mit dieser einschließt. Anders ausgedrückt ist die Haltezunge in dem Montagezustand bezüglich der Längsachse der elektrischen Maschine angewinkelt, schließt mit dieser also einen Winkel von größer als 0° und kleiner als 90° ein. Vorzugsweise ist es vorgesehen, dass die Haltezunge stets eine Erstreckung mit einer Radialkomponente aufweist, also sich nicht ausschließlich in axialer Richtung erstreckt beziehungsweise parallel zu der Längsachse liegt. Unter der radialen Anordnung der Haltezunge ist dabei zu verstehen, dass sie mit einem Grundkörper des Halteelements verbunden sind und ausgehend von diesem in radialer Richtung verläuft. Anders ausgedrückt soll die radiale Richtung derart vorliegen, dass sie auf der Längsachse der elektrischen Maschine senkrecht steht. Dabei ist die Haltezunge bevorzugt elastisch verformbar, sodass sie nach der Montage in ihre ursprüngliche Form drängt.

An dem Gehäuse ist das Gegenelement vorgesehen, welches in dem Montagezustand mit wenigstens einem der Halteelemente zusammenwirkt. Das Gegenelement kann dabei beispielsweise als Rastgegenelement vorliegen und somit dem rastenden Halten des Magnetelements bezüglich des Gehäuses dienen. Das Gegenelement kann insbesondere als Vertiefung in einem Bereich des Gehäuses vorliegen. Sobald das Halteelement den Montagezustand erreicht, greift also die Haltezunge in die Vertiefung beziehungsweise Ausnehmung ein oder hintergreift einen Vorsprung. Nachfolgend ist das Halteelement formschlüssig bezüglich des Gehäuses gehalten. Alternativ oder zusätzlich kann jedoch auch ein kraftschlüssiges Zusammenwirken der Haltezunge mit dem Gegenelement vorgesehen sein. Dabei wird beispielsweise durch elastische Verformung der Haltezunge nach Erreichen des Montagezustands eine Haltekraft bewirkt, welche einer Verlagerung des Halteelements bezüglich des Gehäuses entgegenwirkt. Ebenso kann es vorgesehen sein, dass die Vertiefung beziehungsweise Ausnehmung durch die Haltezunge selbst bei der Montage des Halteelements in dem Gehäuse erzeugt wird. Dabei prägt eine Kante des Halteelements die Vertiefung beziehungsweise Ausnehmung in Form einer Kerbe als Gegenelement beispielsweise in das Gehäuse ein, sodass auch hier wieder eine formschlüssige Verbindung vorliegt.

Erfindungsgemäß kann es vorgesehen sein, dass lediglich eines der Halteelemente in dem Montagezustand mit dem Gegenelement zusammenwirkt. Vorzugsweise ist jedoch jedem der Halteelemente ein entsprechendes Gegenelement zugeordnet beziehungsweise wirken alle Halteelemente mit dem Gegenelement zusammen. Somit sind beide Halteelemente unabhängig voneinander in dem Gehäuse gehalten. Dabei schließen sie das Magnetelement zwischen sich ein, sodass auch dieses, wenigstens in axialer Richtung, in dem Gehäuse befestigt ist. Beispielsweise weisen beide Halteelemente die jeweils wenigstens eine in einem Vormontagezustand in radialer Richtung nach außen weisende Haltezunge auf. Dabei soll die Haltezunge wenigstens eines der Halteelemente in einem Montagezustand mit einem Gegenelement des Gehäuses zum Halten des Magnetelements bezüglich des Gehäuses zusammenwirkt.

Eine Weiterbildung der Erfindung sieht vor, dass die Halteelemente jeweils aus einem Haltering und einem sich in axialer Richtung an den Haltering anschließenden Auflageteil bestehen, wobei an dem Auflageteil eine Auflagefläche vorliegt und das Magnetelement zwischen einem Gehäusemantel des Gehäuses und der Auflagefläche ortsfest gehalten ist. Das Halteelement ist insoweit flanschartig ausgebildet. Es weist dabei den Haltering und das Auflageteil auf, wobei letzteres vorzugsweise denselben Innendurchmesser, jedoch einen geringeren Außendurchmesser als der Haltering aufweist. Das Auflageteil schließt sich in axialer Richtung an den Haltering an. Im Längsschnitt gesehen liegt insoweit eine L-Form des Halteelements vor, wobei der senkrechte Schenkel von dem Haltering und der waagerechte Schenkel von dem Auflageteil gebildet sind.

An dem Auflageteil liegt die Auflagefläche für das Magnetelement vor. Das Magnetelement liegt insofern in axialer Richtung gesehen zwischen den beiden Halteringen vor und wird von den Auflageteilen der Halteelemente in Richtung des Gehäuses beziehungsweise dessen Gehäusemantel gedrängt. Mittels der Halteringe wird somit ein Halten des Magnetelements zumindest in axialer Richtung bewirkt. Weil das Magnetelement bevorzugt sowohl mit der Auflagefläche als auch dem Gehäusemantel in Berührkontakt steht, ist es auch in radialer Richtung sicher gehalten. Insbesondere sind die Auflagefläche und der Gehäusemantel derart voneinander beabstandet, dass ein klemmendes Halten des Magnetelements zwischen ihnen erzielt ist. Durch die Ausgestaltung der Halteelemente jeweils mit Haltering und Auflageteil wird somit ein sicheres Halten des Magnetelements wenigstens in axialer und radialer Richtung erreicht.

Eine Weiterbildung der Erfindung sieht vor, dass der Außenumfang des Halteelements zur Ausbildung der Haltezunge geschlitzt ist. In das Halteelement ist somit wenigstens ein Schlitz eingebracht, der den Außenumfang des Halteelements durchgreift. Bevorzugt ist die Haltezunge durch zwei Schlitze in dem Halteelement ausgebildet, welche beispielsweise parallel zueinander verlaufen. Üblicherweise ist die Haltezunge an dem Haltering vorgesehen, sodass auch der Schlitz beziehungsweise die Schlitze in diesem vorliegen. Durch die geschlitzte Ausführung des Halteelements zur Ausbildung der Haltezunge weist letztere in radialer Richtung dieselbe Erstreckung auf wie benachbarte Bereiche des Halteelements, insbesondere des Halterings.

Eine Weiterbildung der Erfindung sieht vor, dass jedes Halteelement mehrere Haltezungen aufweist und zwischen zwei dieser Haltezungen, insbesondere mittig, jeweils zumindest eine den Außenumfang des Halteelements durchgreifende Führungsausnehmung vorliegt. Die Führungsausnehmung dient der Realisierung einer Verdrehsicherung des Halteelements in Bezug auf das Gehäuse der elektrischen Maschine. Zu diesem Zweck ist ein Führungsgegenelement vorgesehen, welches mit der Führungsausnehmung zum Führen des Halteelements in Umfangsrichtung und damit zur Realisierung der Verdrehsicherung zusammenwirkt. Das Führungsgegenelement kann beispielsweise in Form eines Innenvorsprungs des Gehäuses vorliegen. Vorzugsweise ist die Führungsausnehmung versetzt zu der Haltezunge angeordnet. Insbesondere sind mehrere Haltezungen vorgesehen, wobei zwischen jeweils zwei der Haltezungen die Führungsausnehmung vorliegt. Bevorzugt ist dabei eine mittige Anordnung der Führungsausnehmung zwischen den Haltezungen.

Eine Weiterbildung der Erfindung sieht vor, dass jedes Halteelement einen sich wenigstens teilweise in axialer Richtung erstreckenden Stützarm aufweist, der - in Umfangsrichtung gesehen - zum Halten des Magnetelements neben dem Magnetelement angeordnet ist. Der Stützarm ist beispielsweise mit dem Auflageteil des Halteelements verbunden. Damit der Stützarm wenigstens bereichsweise neben dem Magnetelement zu dessen Halten angeordnet sein kann, ist er daher derart angewinkelt, dass er ausgehend von dem Auflageteil in radialer Richtung nach außen verläuft. Dabei ist es vorteilhaft, wenn seine Erstreckung zusätzlich eine Axialkomponente aufweist, also ein - bezogen auf die Längsachse der elektrischen Maschine - schräger Verlauf des Stützarms vorliegt. Durch die Anordnung des Stützarms neben dem Magnetelement kann er diesen in Umfangsrichtung abstützen beziehungsweise festsetzen.

Eine Weiterbildung der Erfindung sieht vor, dass mehrere Magnetelemente vorliegen und jeweils ein Stützarm zwischen zwei der Magnetelemente eingreift. Besonders vorteilhaft ist die Ausführung des Halteelements mit dem Stützarm, wenn mehrere Magnetelemente vorgesehen sind. In diesem Fall kann jeweils ein Stützarm zwischen zwei der Magnetelemente eingreifen, sodass diese beidseitig von Stützarmen abgestützt sind, sodass eine Verlagerung der Magnetelemente in Umfangsrichtung im Wesentlichen ausgeschlossen ist. Dabei kann es vorgesehen sein, dass der Stützarm in Umfangsrichtung elastisch verformbar ist. Bei der Montage wird ein derart ausgebildeter Stützarm in Umfangsrichtung durch die Magnetelemente zumindest leicht elastisch verformt. Bedingt durch die Elastizität drängt er in seine unverformte Ausgangsform zurück und wirkt dabei eine Kraft in Umfangsrichtung auf die Magnetelemente aus, sodass diese klemmend gehalten sind. Dies ist insbesondere der Fall, wenn in Umfangsrichtung jeweils abwechselnd mindestens eines der Magnetelemente und wenigstens einer von mehreren Stützarmen vorgesehen sind. Vorzugsweise ist wechselt sich jeweils genau eines der Magnetelemente mit genau einem der Stützarme in Umfangsrichtung ab.

Eine Weiterbildung der Erfindung sieht vor, dass der Stützarm an einer Umfangsposition vorgesehen ist, die der Umfangsposition der Haltezunge oder der Führungsausnehmung entspricht. Der Stützarm soll also an derselben Umfangsposition vorliegen wie die Haltezunge beziehungsweise die Führungsausnehmung. Sind mehrere Stützarme vorgesehen, so kann es selbstverständlich auch vorgesehen sein, dass ein oder mehrere Stützarme hinsichtlich ihrer Umfangsposition jeweils der Haltezunge und der Führungsausnehmung zugeordnet sind. Besonders bevorzugt ist es, wenn jeder Haltezunge und jeder Führungsausnehmung jeweils ein Stützarm zugeordnet ist, wobei die jeweiligen Umfangspositionen übereinstimmen.

Eine Weiterbildung der Erfindung sieht vor, dass das Gehäuse einen sich nach innen erstreckenden Haltevorsprung aufweist, der über das Gegenelement verfügt oder dieses ausbildet. Der Haltevorsprung dient der Begrenzung einer Bewegung des Halteelements während der Montage und nachfolgend einem Halten des Halteelements. An dem Haltevorsprung kann beispielsweise eine Anschlagfläche vorliegen, der Haltevorsprung insofern als Anschlagvorsprung ausgebildet sein. Darunter ist zu verstehen, dass die Anschlagfläche im Wesentlichen parallel zu der Haltezunge vorliegt, also im Wesentlichen senkrecht auf der Längsachse der elektrischen Maschine steht. Der Haltevorsprung mit der Anschlagfläche und die Haltezunge sind dabei derart zueinander angeordnet, dass das Halteelement nicht ohne Weiteres über die Position hinaus verlagert werden kann, an welcher sich der Haltevorsprung befindet. Alternativ kann der Haltevorsprung über das Gegenelement verfügen, welches mit dem Halteelement beziehungsweise der Haltezunge zum Halten des Magnetelements bezüglich des Gehäuses zusammenwirkt. Dabei kann das Gegenelement zur Herstellung einer Rastverbindung ausgebildet sein und insoweit als Rastgegenelement vorliegen.

Beispielsweise kann der das Gegenelement aufweisende Haltevorsprung derart ausgebildet sein, dass er auf seiner einen Seite eine Auflaufschräge und auf seiner Oberseite oder auf seiner der Auflaufschräge gegenüberliegende Seite das Gegenelement aufweist. Das Halteelement kann insoweit - bedingt durch die Auflaufschräge - zumindest bereichsweise über den Haltevorsprung hinaus verlagert werden, wobei die Haltezunge durch die Auflaufschräge in radialer Richtung nach innen gedrängt und dabei elastisch verformt wird. Bedingt durch die elastische Verformung drängt die Haltezunge in ihren Ausgangszustand zurück, in welcher sie in radialer Richtung nach außen weist. Ist der Montagezustand erreicht, liegt die Haltezunge im Bereich des Gegenelements vor. Der Haltevorsprung beziehungsweise das Gegenelement sind dabei derart ausgebildet, dass sie eine wenigstens teilweise Verformung der Haltezunge zurück in Richtung ihres Ausgangszustands zulassen. Dabei wirkt die Haltezunge mit dem Gegenelement zusammen, indem sie beispielsweise in dieses eingreift oder es hintergreift, sodass nachfolgend eine Verlagerung des Halteelements aus dem Montagezustand heraus nicht möglich ist.

Eine Weiterbildung der Erfindung sieht vor, dass die Halteelemente als Gleichteile vorliegen. Das bedeutet, dass die wenigstens zwei Halteelemente völlig identisch aufgebaut sind, sodass es nicht notwendig ist, mehrere verschiedene Halteelemente herzustellen. Zur Montage der Halteelemente wird üblicherweise allenfalls eine umgekehrte Orientierung zu wählen sein, sodass die Halteringe der Halteelemente jeweils in axialer Richtung nach außen zeigen.

Die Erfindung betrifft weiterhin ein Verfahren zur Montage einer elektrischen Maschine, insbesondere gemäß den vorstehenden Ausführungen, wobei die elektrische Maschine einen Rotor und einen Stator mit einem Magnetelement aufweist, das mittels zumindest zweier in axialer Richtung zueinander beabstandeter Halteelemente ortsfest in einem Gehäuse der elektrischen Maschine angeordnet wird. Dabei ist vorgesehen, dass zumindest eines der Halteelemente wenigstens eine in einem Vormontagezustand in radialer Richtung nach außen weisende Haltezunge aufweist und bei der Montage die Halteelemente derart in das Gehäuse eingebracht werden, dass die Haltezunge bei Erreichen eines Montagezustands bezüglich einer Längsachse der elektrischen Maschine angewinkelt ist und mit einem Gegenelement des Gehäuses zum Halten des Magnetelements bezüglich des Gehäuses zusammenwirkt. Die elektrische Maschine kann gemäß den vorstehenden Ausführungen weitergebildet sein. Beispielsweise werden die Halteelemente gemeinsam mit dem wenigstens einen Magnetelement in das Gehäuse eingebracht. In dem Gehäuse sind insbesondere an zwei unterschiedlichen Axialpositionen Haltevorsprünge angeordnet, wobei an einer ersten der Axialpositionen ein oder mehrere Haltevorsprünge vorgesehen sind, die über eine Anschlagfläche verfügen, welche im Wesentlichen senkrecht zu der Längsachse der elektrischen Maschine stehen. An einer zweiten der Axialpositionen ist wenigstens ein Haltevorsprung vorgesehen, der über das Gegenelement verfügt. Zudem ist an ihm eine Auflaufschräge vorgesehen.

Die Halteelemente und das Magnetelement werden nun derart in das Gehäuse eingebracht, dass sie zunächst den Haltevorsprung an der zweiten Axialposition passieren. Dabei werden die Haltezungen bedingt durch die Auflaufschräge elastisch verformt, lassen jedoch eine weitere Verlagerung in Richtung der ersten Axialposition zu. Sobald eines der Halteelemente die erste Axialposition erreicht hat, wirkt seine Haltezunge mit der Anschlagfläche zusammen und verhindert eine weitere Verlagerung in axialer Richtung. Somit ist der Montagezustand erreicht. In diesem Montagezustand ist das jeweils andere Halteelement derart angeordnet, dass seine Haltezunge mit dem Gegenelement, welches an dem Haltevorsprung an der zweiten Axialposition vorliegt, zusammenwirkt, um eine Verlagerung des Halteelements entgegen der Montagerichtung zu vermeiden. Somit wird eine weitere Verlagerung in die Montagerichtung durch das Zusammenwirken der Haltezunge des einen Halteelements mit der Anschlagfläche des Haltevorsprungs an der ersten Axialposition verhindert.

Gleichzeitig ist jedoch durch das Zusammenwirken der Haltezunge des anderen Halteelements mit dem Gegenelement an der zweiten Axialposition auch eine Verlagerung entgegen der Montagerichtung nicht mehr möglich. Die Halteelemente und damit auch das Magnetelement sind insoweit zwischen den Haltevorsprüngen in axialer Richtung sicher gehalten.

Die Erfindung wird nachfolgend anhand der in der Zeichnung dargestellten Ausführungsbeispiele näher erläutert, ohne dass eine Beschränkung der Erfindung erfolgt. Dabei zeigen:
- Figur 1: einen Längsschnitt durch eine schematisch dargestellte elektrische Maschine, wobei ein Magnetelement mittels zweier Halteelemente in einem Montagezustand gehalten ist,
- Figur 2: ein erstes der Halteelemente, welches mit einer Anschlagfläche eines ersten Haltevorsprungs zusammenwirkt,
- Figur 3: ein weiteres der Halteelemente, welches mit einem Gegenelement zusammenwirkt, das an einem zweiten Haltevorsprung vorgesehen ist,
- Figur 4: das Halteelement in einer ersten Darstellung,
- Figur 5: das Halteelement in einer zweiten Darstellung, und
- Figur 6: das Halteelement in einer dritten Darstellung.

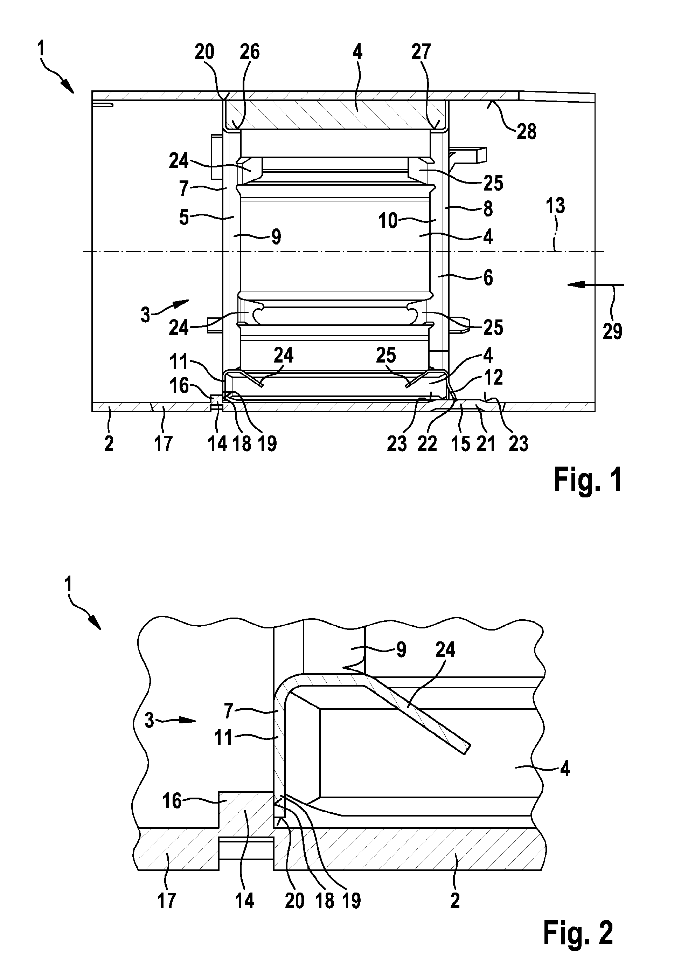

Die Figur 1 zeigt einen Längsschnitt durch eine elektrische Maschine 1 mit einem Gehäuse 2. In dem Gehäuse 2 ist ein Stator 3 sowie wenigstens bereichsweise ein hier nicht dargestellter Rotor angeordnet. Der Stator 3 ist ortsfest in dem Gehäuse 2 gehalten. Der Stator 3 weist mehrere Magnetelemente 4 auf, von welchen hier lediglich drei erkennbar sind. Jedes Magnetelement 4 kann beispielsweise als Permanentmagnetelement oder als Flussleitstück vorliegen. Die Magnetelemente 4 sind mittels zweier Halteelemente 5 und 6 in dem Gehäuse 2 befestigt. Alternativ können auch mehr als zwei Halteelemente vorliegen. Die Haltelemente 5 und 6 sind in axialer Richtung zueinander beabstandet und weisen zumindest in dieser Richtung keinerlei Überlappung auf. Die Halteelemente 5 und 6 bestehen jeweils aus einem, insbesondere im Wesentlichen kreisringförmigen, Haltering 7 beziehungsweise 8 und einem, insbesondere ebenfalls im Wesentlichen kreisringförmigen, Auflageteil 9 beziehungsweise 10. Die Halteelemente 5 und 6 verfügen zudem über jeweils mehrere Haltezungen 11 beziehungsweise 12. Diese weisen zumindest in einem hier nicht dargestellten Vormontagezustand in radialer Richtung nach außen. Unter der radialen Richtung ist dabei eine Richtung zu verstehen, welche auf einer Längsachse 13 der elektrischen Maschine 1 senkrecht steht.

Die Figur 1 zeigt einen Montagezustand der Halteelement 5 und 6 beziehungsweise der Magnetelemente 4. In diesem Montagezustand wirken die Halteelemente 5 und 6 jeweils mit einem Gegenelement 14 beziehungsweise 15 zusammen, um die Magnetelemente 4 bezüglich des Gehäuses 2 zumindest in axialer Richtung, also in eine Richtung, welche parallel zu der Längsachse 13 verläuft, festzusetzen. Das Gegenelement 14 wird von einem Haltevorsprung 16 ausgebildet, der sich ausgehend von dem Gehäuse 2 beziehungsweise von einem Gehäusemantel 17 des Gehäuses 2 in radialer Richtung nach innen erstreckt. Dabei bildet der Haltevorsprung 16 eine Anschlagfläche 18 aus, welcher im Wesentlichen senkrecht zu der Längsachse 13 vorliegt. Die Anschlagfläche 18 ist insoweit im Wesentlichen parallel zu der Haltezunge 11 angeordnet.

Die Anschlagfläche 18 dient als Anschlag beziehungsweise Endanschlag für die Haltezunge 11. Über den Umfang des Gehäuses 2 können mehrere derartige Haltevorsprünge 16 vorgesehen sein, welche sich vorzugsweise alle an derselben Axialposition befinden. Üblicherweise ist jeder Haltezunge 11 ein Haltevorsprung 16 oder zumindest ein Bereich lediglich eines Haltevorsprungs 16 zugeordnet. In letzterem Fall liegt der Haltevorsprung 16 beispielsweise als durchgehender Ringsteg in dem Gehäuse 2 vor und bildet eine durchgehende Anschlagfläche 18 für alle Haltezungen 11 aus. Der Haltevorsprung 16 weist üblicherweise in radialer Richtung eine geringere Erstreckung auf als die Haltezunge 11, ragt jedoch derart weit in das Gehäuse 2 hinein, dass er mit einem freien Ende 19 der Haltezunge 11 zusammenwirken kann. Bevorzugt steht dabei das freie Ende 19 und/oder weitere Bereiche eines Außenumfangs 20 des Halterings 7 zumindest bereichsweise in Berührkontakt mit dem Gehäuse 2 beziehungsweise mit dem Gehäusemantel 17.

In axialer Richtung beabstandet von dem Halteelement 5 ist das Halteelement 6 angeordnet. Dieses ist im Wesentlichen entsprechend zu dem vorstehend beschriebenen Halteelement 5 ausgebildet, sodass insoweit auf die vorstehende Beschreibung verwiesen wird. Die Haltezunge 12 des Halteelements 6 wirkt mit dem Gegenelement 15 zusammen. Dieses liegt an einem Haltevorsprung 21 vor. Im Gegensatz zu dem Gegenelement 14 ist hier jedoch keine Anschlagfläche vorgesehen. Vielmehr liegt das Gegenelement 15 als Vertiefung in dem Haltevorsprung 21 vor, wobei die nicht im Detail dargestellte Vertiefung derart ausgebildet ist, dass die Haltezunge 12 in dem Montagezustand in sie eingreifen kann, sodass eine Rastverbindung zwischen der Haltezunge 12 und dem Haltevorsprung 21 vorliegt. Die Vertiefung muss nicht bereits vor der Montage, als in dem Vormontagezustand, vorliegen. Es kann auch vorgesehen sein, dass die Vertiefung erst durch das Einbringen der Halteelemente 5 und 6 erzeugt wird. Zu diesem Zweck ist die Haltezunge 12 vorzugsweise elastisch verformbar, sodass sie nach dem Einbringen in das Gehäuse 2 in radialer Richtung nach außen, also in Richtung des Gehäuses 2, drängt. Dabei wird die Vertiefung in das Gehäuse 2 beziehungsweise das Gegenelement 15 - welches von einem Bereich des Gehäuses 2 gebildet ist - eingeprägt beziehungsweise eingeschnitten. Zu diesem Zweck weist die Haltezunge 12 beziehungsweise deren freies Ende 19 beispielsweise eine scharfe Kante auf. Nach dem Erreichen des Montagezustands liegt die Haltezunge 12 bezüglich der Längsachse 13 der elektrischen Maschine 1 angewinkelt vor, schließt also mit dieser einen Winkel von größer als 0° und kleiner als 90° ein.

Es ist dabei nicht notwendig, dass das Gegenelement 15, wie hier dargestellt, in radialer Richtung in das Gehäuse 2 hineinragt. Vielmehr kann auch ein ebener Verlauf des Gehäuses 2, also ohne Haltevorsprung 21, vorgesehen sein. Insbesondere weist zumindest eines der Halteelemente 5 und 6 Außenabmessungen auf, welche größer als Innenabmessungen des Gehäuses 2 an der Axialposition sind, an welcher das jeweilige Halteelement 5 oder 6 in dem Montagezustand vorliegt. Beispielsweise steht zu diesem Zweck die Haltezunge 12 in radialer Richtung über den Außenumfang 20 über.

Das Eingreifen erfolgt dabei üblicherweise lediglich mit einem freien Ende 22 der Haltezunge 12. Der Haltevorsprung 21 weist - in axialer Richtung gesehen - wenigstens an einem seiner Enden eine Auflaufschräge 23 auf. Ist lediglich eine Auflaufschräge 23 vorgesehen, so liegt diese auf der dem Gegenelement 14 abgewandten Seite des Haltevorsprungs 21 vor. In der hier dargestellten Ausführungsform sind jedoch zwei Auflaufschrägen 23 vorgesehen. Die Auflaufschrägen 23 dienen dem einfachen Einbringen der Halteelemente 5 und 6 in den Montagezustand, also zwischen die Haltevorsprünge 16 und 21.

Jedes der Halteelemente 5 und 6 verfügt über wenigstens einen Stützarm 24 beziehungsweise 25, wobei bevorzugt jeweils mehrere Stützarme 24 und 25 vorgesehen sind. Die Stützarme 24 und 25 erstrecken sich wenigstens teilweise in axialer Richtung und sind derart angeordnet, dass sie wenigstens bereichsweise neben den Magnetelementen 4 angeordnet sind beziehungsweise zwischen die Magnetelemente 4 eingreifen. Die Stützarme 24 und 25 können daher die Magnetelemente 4 in Umfangsrichtung voneinander beabstanden. Alternativ kann es jedoch auch vorgesehen sein, dass die Stützarme 24 und 25 in Ausnehmungen der Magnetelemente 4 eingreifen. Die Stützarme 24 und 25 dienen insoweit dem Halten der Magnetelemente 4 in Umfangsrichtung. Vorteilhafterweise liegen mehrere Magnetelemente 4 vor, wobei jeweils ein Stützarm 24 beziehungsweise 25 zwischen zwei der Magnetelemente 4 eingreift.

Wie bereits vorstehend beschrieben, bestehen die Halteelemente 5 und 6 jeweils aus den Halteringen 7 und 8 sowie den Auflageteilen 9 und 10. An jedem der Auflageteile 9 und 10 ist nun eine Auflagefläche 26 beziehungsweise 27 vorgesehen. Die Auflageflächen 26 und 27 liegen auf Außenumfängen der Auflageteile 9 und 10 vor. Sie dienen der Aufnahme von - in axialer Richtung gesehen - Abschlussbereichen der Magnetelemente 4, sodass sich die Magnetelemente 4 in radialer Richtung an den Auflageflächen 26 und 27 abstützen können. Die Auflageflächen 26 und 27 sind im Wesentlichen parallel zu der Längsachse 13 und einer Innenfläche 28 des Gehäusemantels 17 angeordnet. Sie sind dabei derart von dem Gehäusemantel 17 beziehungsweise der Innenfläche 28 beabstandet, dass die Magnetelemente 4 zwischen den Auflageflächen 26 und 27 und dem Gehäusemantel 17 beziehungsweise dessen Innenfläche 28 in radialer Richtung gehalten sind, beispielsweise klemmend. In axialer Richtung stoßen die Magnetelemente 4 mit ihren Endabschnitten an die Halteringe 7 und 8 an. Die Halteringe 7 und 8 begrenzen demnach die Magnetelemente 4 in axialer Richtung beziehungsweise nehmen diese zwischen sich auf. Auf diese Weise sind die Magnetelemente 4 zwischen den Halteringen 7 und 8 gehalten, sodass sie in axialer Richtung nicht beziehungsweise nur gemeinsam mit den Halteelementen 5 und 6 verlagerbar sind.

Insgesamt sorgen die Halteringe 7 und 8 demnach für ein Festsetzen der Magnetelemente 4 in axialer Richtung, die Auflageflächen 26 und 27 gemeinsam mit dem Gehäusemantel 17 für ein Festsetzen in radialer Richtung und die Stützarme 24 und 25 für ein Festsetzen in Umfangsrichtung. Die Magnetelemente 4 sind somit nach Erreichen des Montagezustands mittels der Halteelemente 5 und 6 sicher ortsfest in dem Gehäuse 2 befestigt.

Bei der Montage der elektrischen Maschine 1 ist es vorgesehen, die Magnetelemente 4 gemeinsam mit den Halteelementen 5 und 6 in Montagerichtung 29 gemeinsam oder nacheinander in das Gehäuse 2 einzubringen. Die Halteelemente 5 und 6 beziehungsweise die Magnetelemente 4 werden dabei so lange in Montagerichtung 29 verlagert, bis die Haltezunge 11 des Halteelements 5 in Berührkontakt mit der Anschlagfläche 18 des Haltevorsprungs 16 tritt. An diesem Punkt ist der Montagezustand erreicht und das Halteelement 5 kann nicht mehr weiter in Montagerichtung 19 verlagert werden. In dem in der Figur 1 gezeigten Montagezustand ist zudem das Halteelement 6 derart angeordnet, dass seine Haltezunge 12 mit dem Gegenelement 15 zusammenwirkt, insbesondere in die Vertiefung beziehungsweise Ausnehmung des Haltevorsprungs 21 eingreift, sodass eine rastende Verbindung zwischen der Haltezunge 12 und dem Haltevorsprung 21 vorliegt. Entsprechend kann das Halteelement 6 nicht mehr entgegen der Montagerichtung 29 aus dem Gehäuse 2 herausbewegt werden. Insgesamt kann also das Halteelement 5 nicht weiter in Montagerichtung 29 und das Halteelement 6 nicht entgegen der Montagerichtung 29 bewegt werden. Zwischen den Halteelementen 5 und 6 sind die Magnetelemente 4 angeordnet. Somit kann also der aus Magnetelementen 4 und Halteelementen 5 bestehende Stator 3 nicht mehr aus dem Gehäuse 2 herausbewegt werden, ohne zuvor die Verbindung zwischen der Haltezunge 12 und dem Haltevorsprung 21 zu lösen.

Das Einbringen der Halteelemente 5 und 6 in das Gehäuse 2 wird durch die Auflaufschräge 23, welche auf der dem Gegenelement 14 abgewandten Seite des Gegenelements 15 vorliegt, erleichtert beziehungsweise ermöglicht. Die Auflaufschräge 23 bewirkt eine elastische Verformung der Haltezungen 11 und 12 in axialer Richtung, sodass ein einfaches Aufschieben der Halteelemente 5 und 6 auf den Haltevorsprung 21 möglich ist. Während die Haltezunge 11 des Halteelements 5 nach Überlaufen des Haltevorsprungs 21 wieder ihre ursprüngliche Stellung einnimmt, also in radialer Richtung nach außen weist, ist die Haltezunge 12 in dem Montagezustand in axialer Richtung ausgelenkt, sodass eine sichere Rastverbindung zwischen der Haltezunge 12 und dem Haltevorsprung 21 vorliegt. Die Auslenkung liegt dabei zur Ausbildung der sicheren Rastverbindung entgegen der Montagerichtung 29 vor.

Die Figur 2 zeigt eine Detailansicht der elektrischen Maschine 1 im Bereich der Haltezunge 11. Die dargestellten Elemente entsprechen im Wesentlichen den anhand der Figur 1 erläuterten. Es wird insofern auf die vorstehende Beschreibung verwiesen. Der Haltevorsprung 16 ist beispielsweise durch Prägung des Gehäuses 2 hergestellt.

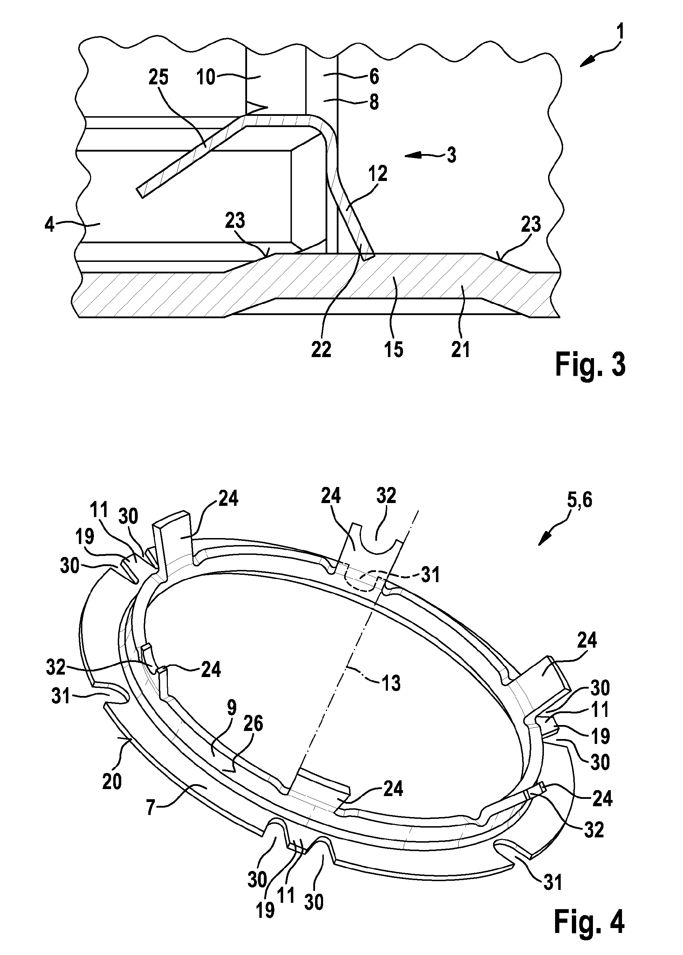

Die Figur 3 zeigt eine Detailansicht der elektrischen Maschine 1 im Bereich der Haltezunge 12. Entsprechend wird auch hier auf die vorstehende Beschreibung verwiesen.

Die Figur 4 zeigt die Halteelemente 5 und 6 in einer ersten Darstellung. Es wird deutlich, dass die Halteelemente 5 und 6 identisch und insoweit als Gleichteile ausgebildet sind. Nachstehend wird daher lediglich auf das Halteelement 5 eingegangen und die entsprechenden Bezugszeichen verwendet. Die Ausführungen sind dennoch stets auf das Halteelement 6 übertragbar. Das Halteelement 5 besteht, wie bereits vorstehend beschrieben, aus dem Haltering 7 und dem Auflageteil 9, wobei der Haltering 7 sich im Wesentlichen in radialer Richtung erstreckt, während das Auflageteil 9 größtenteils in axialer Richtung vorliegt. Sowohl der Haltering 7 als auch das Auflageteil 9 sind in Umfangsrichtung durchgehend ausgebildet, sind also an keiner Stelle vollständig unterbrochen. In dem Haltering 7 sind drei Haltezungen 11 ausgebildet, in dem jeweils zwei Radialschlitze 30 in ihn eingebracht sind, wobei der Außenumfang 20 von Radialschlitzen 30 durchgriffen ist. Die Radialschlitze 30 liegen insoweit als randoffene Ausnehmungen vor. In dem hier dargestellten Ausführungsbeispiel sind drei Haltezungen 11 vorgesehen, welche gleichmäßig über den Umfang des Halteelements 5 verteilt sind, also unter einem Winkelabstand von jeweils 120° zueinander vorliegen. Es kann jedoch eine beliebige Anzahl Haltezungen 11 in einer beliebigen Anordnung vorgesehen sein. Neben den Haltezungen 11 weist das Halteelement 5 Führungsausnehmungen 31 auf, wobei jede Führungsausnehmung 31 den Außenumfang 20 des Halterings 7 durchgreift. Auch die Führungsausnehmungen 31 sind gleichmäßig über den Umfang des Halteelements 5 verteilt, vorzugsweise liegen die Führungsausnehmungen 31 jeweils mittig zwischen den Haltezungen 11 vor, sind also ebenfalls um jeweils 120° in Umfangsrichtung zueinander beabstandet. Die Stützarme 24 sind an dem Auflageteil 9 angeordnet und sind gegenüber der Längsachse 13 der elektrischen Maschine 1 angewinkelt. Jeder Stützarm 24 ist an einer Umfangsposition vorgesehen, an welcher auch eine der Haltezungen 11 oder eine der Führungsausnehmungen 31 vorgesehen ist. Die Stützarme 24, welche den Führungsausnehmungen 31 zugeordnet sind, weisen ebenfalls randoffene Ausnehmungen 32 auf, welche mit den Führungsausnehmungen 31 korrespondieren.

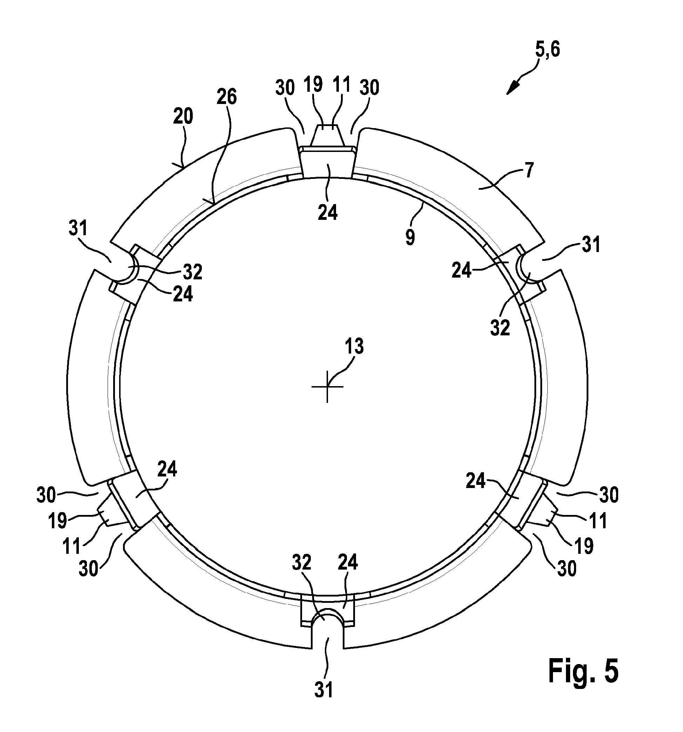

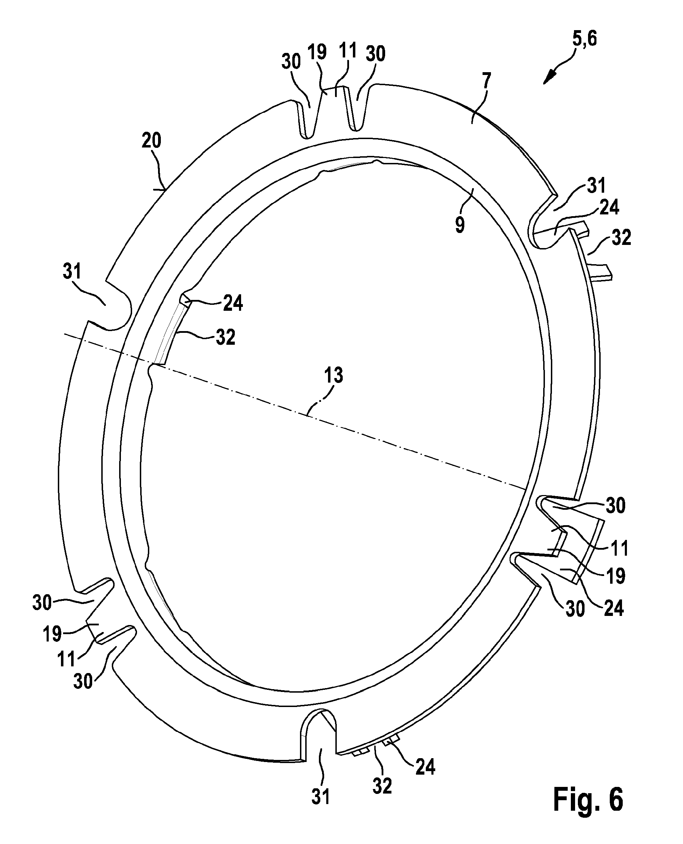

Letzteres ist in der Figur 5 deutlicher zu erkennen. Die Figur 5 zeigt dabei eine zweite Ansicht des Halteelements 5 beziehungsweise 6. Hier wird deutlich, dass in Axialprojektion, also in axialer Richtung gesehen, der Grund der Führungsausnehmung 31 mit dem Grund der Ausnehmung 32 im Wesentlichen zusammenfällt. Die Führungsausnehmungen 31 beziehungsweise die Ausnehmungen 32 dienen dem Zusammenwirken mit einem Führungsgegenelement (hier nicht dargestellt), welches beispielsweise von einem Innenvorsprung des Gehäuses 2 gebildet ist. Das in der Figur 5 dargestellte Halteelement 5 beziehungsweise 6 entspricht dem anhand der Figuren 1 bis 7 beschriebenen. Es wird insofern auf die vorstehenden Ausführungen verwiesen. Entsprechendes gilt für die Figur 6, welche eine dritte Ansicht der Halteelemente 5 und 6 zeigt.

## Patentansprüche

1. Elektrische Maschine (1), insbesondere einer Startereinrichtung für eine Brennkraftmaschine, mit einem Rotor und einem Stator (3), der wenigstens ein Magnetelement (4) aufweist, das mittels zumindest zweier in axialer Richtung zueinander beabstandeter Halteelemente (5,6) ortsfest in einem Gehäuse (2) der elektrischen Maschine (1) angeordnet ist, **dadurch gekennzeichnet, dass** zumindest eines der Halteelemente (5,6) wenigstens eine in einem Vormontagezustand in radialer Richtung nach außen weisende Haltezunge (11,12) aufweist, die in einem Montagezustand bezüglich einer Längsachse (13) der elektrischen Maschine (1) angewinkelt ist und mit einem Gegenelement (14,15) des Gehäuses (2) zum Halten des Magnetelements (4) bezüglich des Gehäuses (2) zusammenwirkt.

2. Elektrische Maschine nach Anspruch 1, **dadurch gekennzeichnet, dass** die Halteelemente (5,6) jeweils aus einem Haltering (7,8) und einem sich in axialer Richtung an den Haltering (7,8) anschließenden Auflageteil (9,10) bestehen, wobei an dem Auflageteil (9,10) eine Auflagefläche (26,27) vorliegt und das Magnetelement (4) zwischen einem Gehäusemantel (17) des Gehäuses (2) und der Auflagefläche (26,27) ortsfest gehalten ist.

3. Elektrische Maschine nach einem der vorhergehenden Ansprüche, **dadurch gekennzeichnet, dass** der Außenumfang (20) des Halteelements (5,6) zur Ausbildung der Haltezunge (11,12) geschlitzt ist.

4. Elektrische Maschine nach einem der vorhergehenden Ansprüche, **dadurch gekennzeichnet, dass** jedes Halteelement (5,6) mehrere Haltezungen (11,12) aufweist und zwischen zwei dieser Haltezungen (11,12), insbesondere mittig, jeweils zumindest eine den Außenumfang (20) des Halteelements (5,6) durchgreifende Führungsausnehmung (31) vorliegt.

5. Elektrische Maschine nach einem der vorhergehenden Ansprüche, **dadurch gekennzeichnet, dass** jedes Halteelement (5,6) einen sich wenigstens teilweise in axialer Richtung erstreckenden Stützarm (24,25) aufweist, derin Umfangsrichtung gesehen - zum Halten des Magnetelements (4) neben dem Magnetelement (4) angeordnet ist.

6. Elektrische Maschine nach einem der vorhergehenden Ansprüche, **dadurch gekennzeichnet, dass** mehrere Magnetelemente (4) vorliegen und jeweils ein Stützarm (24,25) zwischen zwei der Magnetelemente (4) eingreift.

7. Elektrische Maschine nach einem der vorhergehenden Ansprüche, **dadurch gekennzeichnet, dass** der Stützarm (24,25) an einer Umfangsposition vorgesehen ist, die der Umfangsposition der Haltezunge (11,12) oder der Führungsausnehmung (31) entspricht.

8. Elektrische Maschine nach einem der vorhergehenden Ansprüche, **dadurch gekennzeichnet, dass** das Gehäuse (2) einen sich nach innen erstreckenden Haltevorsprung (16,21) aufweist, der über das Gegenelement (14,15) verfügt oder dieses ausbildet.

9. Elektrische Maschine nach einem der vorhergehenden Ansprüche, **dadurch gekennzeichnet, dass** die Halteelemente (5,6) als Gleichteile vorliegen.

10. Verfahren zur Montage einer elektrischen Maschine (1), insbesondere nach einem oder mehreren der vorhergehenden Ansprüche, wobei die elektrische Maschine (1) einen Rotor und einen Stator (3) mit wenigstens einem Magnetelement (4) aufweist, das mittels zumindest zweier in axialer Richtung zueinander beabstandeter Halteelemente (5,6) ortsfest in einem Gehäuse der elektrischen Maschine (2) angeordnet wird, **dadurch gekennzeichnet, dass** zumindest eines der Halteelemente (5,6) wenigstens eine in einem Vormontagezustand in radialer Richtung nach außen weisende Haltezunge (11,12) aufweist und bei der Montage die Halteelemente (5,6) derart in das Gehäuse (2) eingebracht werden, dass die Haltezunge (11,12) bei Erreichen eines Montagezustands bezüglich einer Längsachse (13) der elektrischen Maschine (1) angewinkelt ist und mit einem Gegenelement (14,15) des Gehäuses (2) zum Halten des Magnetelements (4) bezüglich des Gehäuses (2) zusammenwirkt.
